# EUROPEAN PATENT SPECIFICATION

(11) **EP 3 000 733 B1**
(45) Date of publication and mention of the grant of the patent: **24.02.2021**
(21) Application number: 15187439.3
(22) Date of filing: 29.09.2015
(51) Int. Cl.: B64D 11/06

(54) **AIRCRAFT SOFA CONVERTIBLE TO BED**
IN EIN BETT UMWANDELBARES FLUGZEUGSOFA
CANAPÉ D'AÉRONEF CONVERTIBLE EN LIT

(30) Priority: 29.09.2014 US 201414499973
(43) Date of publication of application: 30.03.2016
(73) Proprietor: Hamilton Sundstrand Corporation, Charlotte, NC 28217 (US)
(72) Inventor: BREUER, Kurt F., Marinette, WI Wisconsin 54143 (US)
(74) Representative: Dehns

(56) References cited:
- EP-A2- 0 980 826
- US-A- 5 333 818
- US-A1- 2007 262 625

## Description

### BACKGROUND OF INVENTION

This invention relates, generally, to sofa (divan) for a vehicle and, more specifically, to a sofa that is convertible to a bed (berth) for an aircraft.

The known aircraft convertible sofa (divan) typically incorporates sliding and/or hinged bed panels that are stowed atop of a seating surface of the sofa and configured to be extended. After the bed panels have been extended to form a bed (berth), a downward load under the bed is transmitted through supports that are manually and individually folded down and impart a concentrated load upon a carpeted floor of a cabin of an aircraft. The sofa-bed also includes multiple structural elements for attachment to the floor.

It is desirable to provide an aircraft sofa that converts into a bed and is suitable for take-off and landing in a "sofa" configuration and in-flight use in a "bed" configuration. It is desirable also that the sofa-bed does not compromise height or comfort of seating of the sofa-bed, impart an undesirable concentrated load upon the floor of the aircraft, or reduce capability of the sofa-bed to stow mechanisms of the bed or other items underneath the seating surface of the sofa-bed. It is desirable also that the sofa-bed be structurally capable of sustaining a significant amount of static and dynamic loads.US 5333818A P which discloses all the features of the preamble of independent claim 1, relates to an aircraft berthing seat.

### BRIEF DESCRIPTION OF INVENTION

According to the invention, a sofa of an aircraft convertible to a bed is provided. The convertible aircraft sofa includes at least one seat having a seating surface and back support. A drawer is disposed underneath the seating surface, is configured to extend outward from underneath the seating surface to define an under-seat compartment and be positioned spaced from the seating surface, and includes a panel system. The panel system is configured to be deployed in stages within the drawer for deployment of the convertible aircraft sofa to the bed, support at least one cushion, and has at least one panel configured to be brought into spaced relationship with the seating surface and then flipped and folded to be positioned adjacent to and in substantial alignment with the seating surface , wherein: the at least one cushion includes a first cushion and a second cushion, and the at least one panel includes a first panel; wherein the seating surface is covered with the first cushion and panel is disposed directly and immediately beneath the second cushion; and wherein: in a first stage of deployment of the panel system to form the bed: the drawer and second cushion is extended partially outward horizontally from underneath the seating surface so that only a portion of cushion is disposed below cushion; in a second stage of deployment of the panel system to form the bed: the drawer and the second cushion is extended completely horizontally outward so that the entirety of the second cushion is spaced from and disposed below the first cushion;in a third stage of deployment of the panel system to form the bed: the panel is deployed so that an entirely of the second cushion is in alignment with and spaced from the first cushion and a bearing pad automatically drops into position upon a floor of a cabin of the aircraft located under the convertible aircraft sofa; and in a fourth stage of deployment of the panel system to form the bed: the panel is deployed so that an entirety of the first panel, without the second cushion, is flipped and folded over, towards the first cushion, and down, so that the first panel is adjacent to and in alignment with seating surface.

The aircraft sofa converts into a bed and is suitable for take-off and landing in a "sofa" configuration and in-flight use in a "bed" configuration. The convertible aircraft sofa also does not compromise height or comfort of seating of the convertible aircraft sofa, impart an undesirable concentrated load upon the floor of the aircraft, or reduce capability of the convertible aircraft sofa to stow mechanisms of the bed or other items underneath the seating surface of the convertible aircraft sofa. The convertible aircraft sofa also is structurally capable of sustaining a significant amount of static load.

### BRIEF DESCRIPTION OF DRAWINGS

The subject matter that is regarded as the invention is particularly pointed out and distinctly claimed in the claims at the conclusion of the specification. The foregoing and other features and advantages of the invention are apparent from the following detailed description taken in conjunction with the accompanying drawing in which:
FIG. 1 is a side view of a non-limiting exemplary embodiment of an aircraft sofa (divan) convertible to a bed (berth) according to the invention showing the convertible aircraft sofa fully stowed for take-off and landing of the aircraft;
FIG. 2 is a side view of the aircraft convertible sofa illustrated in FIG. 1 showing a first stage of deployment of the convertible aircraft sofa to the bed;
FIG. 3 is a side view of the aircraft convertible sofa illustrated in FIG. 1 showing a second stage of the deployment;
FIG. 4 is a side view of the aircraft convertible sofa illustrated in FIG. 1 showing a third stage of the deployment;
FIG. 5 is a side view of the aircraft convertible sofa illustrated in FIG. 1 showing a fourth stage of the deployment; and
FIG. 6 is a side view of the aircraft convertible sofa illustrated in FIG. 1 showing the convertible aircraft sofa fully deployed to the bed for use thereof during flight of the aircraft;

### DETAILED DESCRIPTION OF INVENTION

Referring now to the figures, a non-limiting exemplary embodiment of a sofa (divan) convertible to a bed (berth) of a fuselage or cabin of an aircraft (not shown) is generally indicated at **10.** Although the sofa-bed **10** is disclosed herein as being implemented with an aircraft, it should be appreciated that the sofa-bed **10** can be implemented with other suitable vehicles, such as boats and other recreational vehicles. It should be appreciated also that the sofa-bed **10** can be used as a household convertible sofa (but, in such use, does not need structural capability to be crash-tested). And, although the sofa-bed **10** is designed as being aft-facing with respect to the aircraft, it should be appreciated that the sofa-bed **10** can face in any suitable direction respect to the aircraft.

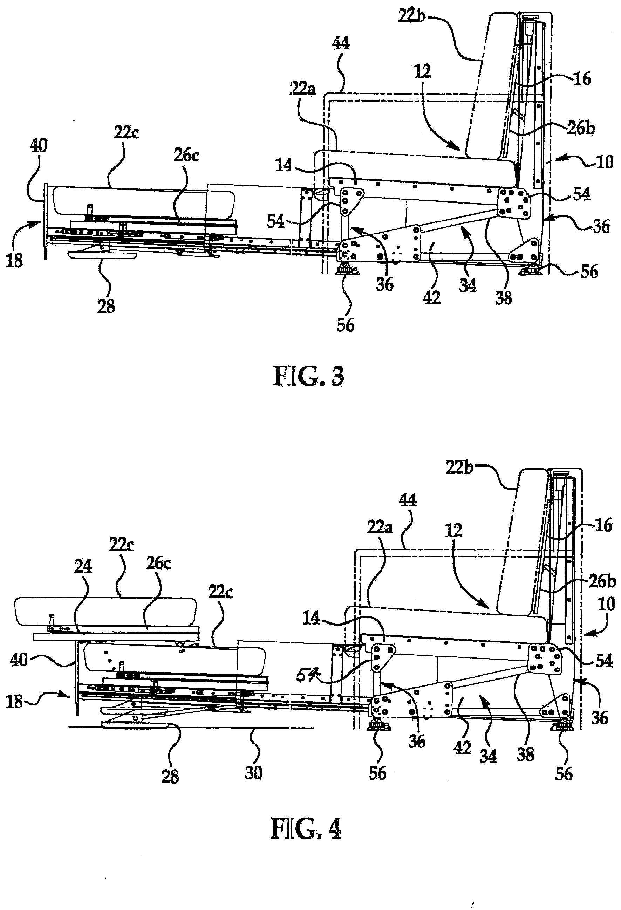

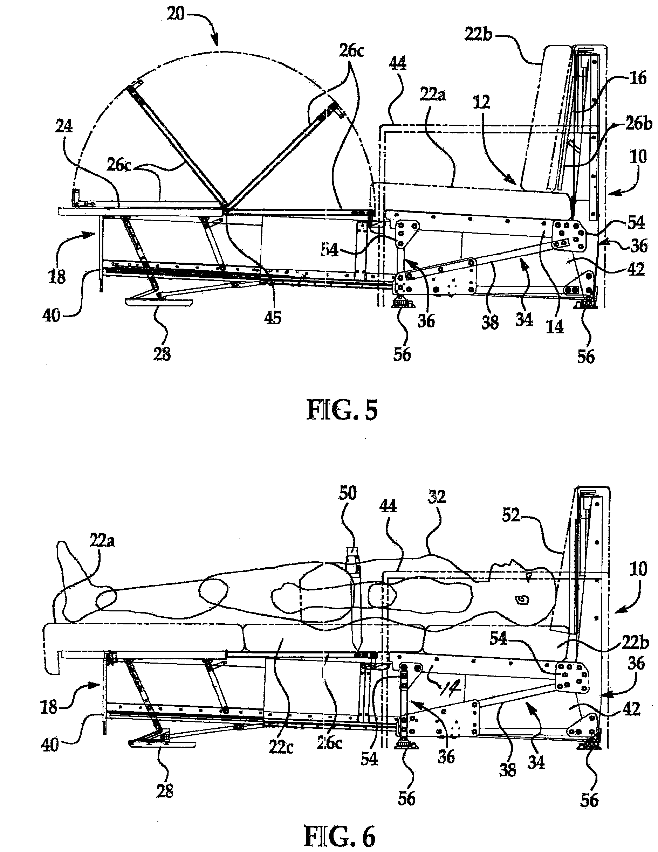

As shown in the figures, the sofa-bed **10** includes, in general, at least one aft-facing seat, generally indicated at **12,** including a seating surface **14** and seat back or back support **16.** A drawer, generally indicated at **18,** is disposed underneath the seating surface **14** and configured to extend outward from underneath the seating surface **14.** The drawer **18** also includes a panel system, generally indicated **20** in FIG. 5, that is configured to be deployed in stages within the drawer **18** for deployment of the sofa-bed **10** to the bed and support at least one mattress or cushion **22.** A lever-control handle **24** (FIGS. 4 and 5) is adapted to latch/lock in place panels **26** of the panel system **20** and release the panels **26** therefrom. A bearing pad **28** automatically deploys or drops into position upon a floor **30** (FIG. 4) of a cabin of the aircraft located under the sofa-bed **10** by the deployment of the panel system **20** and reacts to a downward load on the floor **30** (FIG. 4).

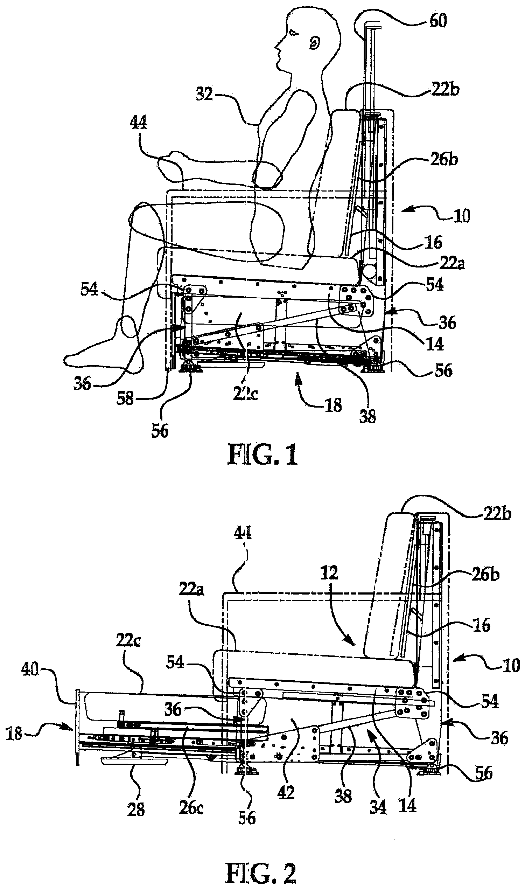

With respect to the sofa-bed **10** being implemented for seating and in an aspect of the embodiment, FIG. 1 shows the sofa-bed **10** fully stowed for take-off and landing of the aircraft. The sofa-bed **10** is a combination or set of the seats **12** forming a bench or similar grouping of individual seats **12**-i.e., the seating surface **14** and back support **16** define an individual seat or a bench upon which an individual, an occupant, or a passenger **32** (FIGS. 1 and 6) or set of passengers **32** can sit. (In the figures, the bench or similar grouping of individual seats **12** is shown incomplete, and only one passenger **32** is shown).

The sofa-bed **10** includes also at least one support structure, generally indicated at **34,** and a set of legs, generally indicated at **36,** used as seat-to-aircraft attachments. The seat **12** and support structure **34** can be formed of materials similar to those of the legs **36**-namely, steel, titanium, alloys thereof, or similar lightweight and high-strength materials. The seat **12** can have any size or dimensions (e.g., depth and thickness) appropriate for an aircraft and be formed from multiple supports or long continuous supports. Similarly, any number of seats **12** can be coupled together, including combinations of two, three, four, five, and six seats **12.** The sofa-bed **10** can also define discrete seats **12** or a general bench that is designed to seat a discrete number of the passengers **32.** Sets of the legs **36** can be shared between corresponding adjacent individual seats **12** or spaced along the bench to support a weight of the number of passengers **32** for which the bench was designed. This reduces a number of the legs **36** and parts needed to assemble the sofa-bed **10** in comparison to a number needed for the individual seats **12** to accommodate the same number of passengers **32.**

The support structure **34** includes any number of cross members, supports, or similar structures **38** that distribute weight of the seating surface **14,** back support **16,** and passenger **32** over the set of legs **36** and link each of the legs **36** or connect the legs **36** to the seat **12.** The seating surface **14** and back support **16** can have any width, height, or length, depending upon occupancy and similar requirements for the seat **12.** Similarly, the back support **16** can also be positioned to be any distance from a front edge of the seat **12.** A cross member **38** also is directly coupled to a back leg **36** and front leg **36.** The seating surface **14** and back support **16** can also include additional mechanisms and functionality-including positional adjustment, reclining, collapsibility, and similar features incorporation of which should be readily appreciated such that discussion thereof has been omitted for sake of clarity.

The drawer **18** defines front and side shrouds **40** (only the front one being shown) that shroud the panels **26.** The shrouds **40** can be decorative to present a more acceptable appearance of the sofa-bed **10.** Extension of the drawer **18** outward from underneath the seating surface **14** defines an under-seat compartment **42.** The under-seat compartment **42** can be enclosed by the shrouds **40** and provide a stowage space for storage of life vests, life rafts, and similar emergency equipment. The legs **36** protect the under-seat compartment **42** from being compressed by dissipating axial and sheering forces and similar energy and, thereby, prevent damage to contents of the under-seat compartment **42.**

The seating surface **14** and back support **16** are each covered with a cushion **22** in the form of upholstered foam or similar padding or similarly adorned to improve comfort of the passenger **32.** More specifically, the seating surface **14** is covered with cushion **22a,** and the back support **16** is covered with cushion **22b.** Furthermore, cushion **22c** is deployably stowed in the drawer **18.**

The panels **26** of the panel system **20** include panel **26b** disposed directly and immediately behind cushion **22b** and panel **26c** disposed directly and immediately beneath cushion **22c.** Panel **26b** is configured to support cushion **22b** and be folded downward to be stored vertically. In the embodiment, panel **26b** serves as the back support **16.** Panel **26c** is configured to support cushion **22c** when stowed.

An upholstered arm rest **44** is attached to each end of the sofa-bed **10,** includes a leather seam and cap, and defines clearance. More specifically, the arm rest **44** provides a space for placement of multi-media controls (such as audio and video controls, attendant-service buttons, temperature controls, and environmental controls), cup holders, collapsible tables, and similar conveniences or features. For instance, an adjustable leather-covered tray can be stowed in the arm rest **44.** Any number and combination of these features can be included in the arm rest **44.** Arm rests **44** and similar components can be situated in the middle of or within the sofa-bed **10** to define respective individual seats **12.** Any number of arm rests **44** can be included in the sofa-bed **10** to define the individual seats **12.**

The sofa-bed **10** may be set up as a row perpendicular to an outer wall of the cabin or situated against the outer wall, in which case the sofa-bed **10** can be mounted to the wall and floor **30.** The sofa-bed **10** can also be positioned against and mounted to interior walls of the cabin or upon a seat track (not shown) of the floor **30.** The drawer **18** is configured to slide along integral linear bearings.

With respect to the sofa-bed **10** being implemented for bedding and in an aspect of the embodiment, FIGS. 2 - 5 show respective stages of deployment of the sofa-bed **10** to the bed, in general (and certain structure thereof, in particular), and FIG. 6 shows the sofa-bed **10** fully deployed to the bed for in-flight use thereof.

Referring now to FIG. 2, a first stage of deployment of the sofa-bed **10** to a bed is shown in which the drawer **18,** including cushion **22c,** is extended partially outward horizontally from underneath the seating surface **14.** In this way, only a portion of cushion **22c** is disposed below cushion **22a,** and the stowage space of the under-seat compartment **42** underneath the seating surface **14** is partially created.

Referring now to FIG. 3, a second stage of the deployment is shown in which the drawer **18,** including cushion **22c,** is so extended completely outward. In this way, an entirety of cushion **22c** is spaced from and disposed below cushion **22a,** and the stowage space is completely created.

Referring now to FIG. 4, a third stage of the deployment is shown in which panel **26c** is deployed. In this way, an entirety of cushion **22c** is brought into alignment with (although still spaced from) cushion **22a.** The bearing pad **28** automatically deploys or drops into position by the deployment of panel **26c** and reacts to a downward load on the floor **30.** In particular, the bearing pad **28** mechanically moves by the deployment of panel **26c** (and the panel system **20,** in general). Latch controls-i.e., the lever-control handle **24**-latches/locks panel **26c** in place after panel **26c** is hooked in place. Panel **26c** is hinged to the drawer **18** and configured to flip about a hinge **45** (FIG. 5).

Referring now to FIG. 5, a fourth stage of the deployment is shown in which panel **26c** is deployed again. In this way, an entirety of panel **26c** (without cushion **22c)** is flipped about the hinge **45** and folded over (toward cushion **22a)** and down (adjacent to and in alignment with the seating surface **14)** and then hooked in place.

Referring now to FIG. 6, the sofa-bed **10** is shown fully deployed to the bed for use thereof during flight of the aircraft. The sofa-bed **10** defines a tip-out surface (not shown) that is configured to be moved (in particular, folded) away from a vertical, stowed orientation such that the tip-out surface is suitable for use as a back when the sofa-bed **10** is to be used for seating and move to the vertical orientation such that the tip-out surface is suitable for use as a headboard when the sofa-bed **10** is to be used for bedding. Toward this end, the sofa comprises also a control (not shown) that is positioned in back and rotatable to move the tip-out surface to the vertical orientation (i.e., a "headboard" configuration) and non-vertical orientation (i.e., "seating" configuration). A passenger-restraint system-in a form of a berthing belt **50**-and fairing **52** configured to shield a view of an edge of the tip-out surface are shown only in FIG. 6.

Each of the legs **36** includes a seat-mounting mechanism **54** and base frame or floor-mounting mechanism **56.** The leg **36** also can be attached to different portions of a frame of the seat **12,** such as interior ones, or at edges or ends of the seat frame. The leg **36** can also have any size or dimensions and be a hollow structure and roughly rectangular, cylindrical, or similarly shaped.

The seat-mounting mechanism **54** can be bolted, welded, or similarly fit or attached to the leg **36.** The seat-mounting mechanism **54** can also define a set of holes through which attachments are utilized in conjunction with corresponding holes or structures of the seat frame and any number of attachment points. The seat-mounting mechanism **54** can be also secured to the seat frame by any number of attachments and welded onto the seat frame or similarly attached to the seat **12.** The leg **36** also can be directly mounted onto the seat frame using any number of bolts, rivets, inter-locking parts, or similar attachments or structures or by form-fitting, welding, or similar techniques.

The floor-mounting mechanism **56** couples the leg **36** to the floor **30** and is designed to be bolted, welded, riveted, screwed, or similarly attached to the floor **30.** Each component of the floor-mounting mechanism **56** can be formed from aluminum, titanium, steel, alloys thereof, or similar lightweight and high-strength materials (i.e., with high material and tensile strength). The floor-mounting mechanism **56** also defines holes for bolts, screws, or similar attachments or structures or attachment points for welding, riveting, or similar attaching. The floor-mounting mechanism **56** also is configured to dissipate sheering forces or distribute them between the seat **12** and floor **30** and allow for easy detachment of the seat **12** from the floor **30.**

In an aspect of the embodiment, components of the sofa-bed **10,** especially the legs **36,** can be formed from steel, titanium, alloys thereof, or similar lightweight materials having a high material strength and capable of withstanding sheering and axial forces generated during a 16-G pulse or impact, which are often utilized as a benchmark in testing of aircraft components. The legs **36** can be also designed to dissipate forces acting upon the sofa-bed **10,** thereby reducing the sheering and axial forces on the legs **36** and floor **30** and increasing a likelihood that the sofa-bed **10** is not dislodged and the floor **30** is not deformed or damaged. Avoidance of this dislodgement, deformation, and damage improves safety of the occupants during and after periods when extreme forces are acting or exerted on the seat **12,** floor, **30,** and legs **36** from testing, crashing, or similar events.

The sofa-bed **10** includes also a kick strip **58** (FIG. 1), at least one headrest **60** (FIG. 1) that is plugged into the sofa-bed **10** and may be stowed or adjusted by sliding down the headrest **60** behind the back support **16** and inside a rear portion of the sofa-bed **10,** and a bed-deployment release (bed control). A touch-latch (not shown) is configured to release the headrest **60** from a "stowed" configuration of the headrest **60.** The sofa-bed **10** can include also non-metallic materials (including finishes or decorative surfaces)

The sofa **10** converts into a bed and is suitable for take-off and landing in a "sofa" configuration and in-flight use in a "bed" configuration. The sofa-bed **10** also does not compromise height or comfort of seating of the sofa-bed **10,** impart an undesirable concentrated load upon the floor **30,** or reduce capability of the sofa-bed **10** to stow mechanisms of the sofa-bed **10** or other items underneath the seating surface **14.** The sofa-bed **10** also is structurally capable of sustaining a significant amount of static load.

More specifically, the sofa-bed **10** defines self-contained stowage for a cushion **22c** and mechanisms pertaining to deployment of the sofa-bed **10** to the bed. Also, in the "sofa" configuration with two passengers, structure and internal mechanisms of the sofa-bed **10** are sufficiently robust to be dynamically crash-tested at 16 G and sufficiently flexible to sustain a required deformation of the seat track that is imposed upon the sofa-bed **10** prior to a crash test. And, in the "bed" configuration, the sofa-bed **10** can withstand vertical G with associated loads imposed by the two passengers and inertia loads originating from a mass of the sofa-bed **10** itself. Furthermore, upward loads from the passengers are transmitted into structure of the sofa-bed **10** through restraint attachments with a path of the load following through the structure to the floor-mounting mechanism **56** and other structure attached to the floor **30.** In addition, the attached structure and floor **30** disposed underneath a cantilevered portion of the sofa-bed **10** react to downward loads in the "bed" configuration with minimum pressure on the floor **30.** Moreover, the sofa-bed **10** is configured to be slidingly deployed solidly and smoothly and released and locked by the single lever-control handle **24.**

Also, the sofa-bed **10** defines the front and side shrouds **40** fully around the sofa-bed **10** to present a satisfactory appearance of the sofa-bed **10.** And, an entirety of the sofa-bed **10** and additional segments are stowed internally. Furthermore, the bearing pad **28** can be automatically deployed to distribute downward loads under the sofa-bed **10** over a large area of the floor **30.** In addition, the sofa-bed **10** is designed for 16-G dynamic crash-testing with only the legs **36** attached to the aircraft. Moreover, these attached structures are disposed only on respective ends of the sofa-bed **10,** allowing a sufficient amount of clearance for mechanisms of the sofa-bed **10** to be fully stowed underneath the seating surface **14** of the sofa-bed **10.**

While the invention has been described in detail in connection with only a limited number of embodiments, it should be readily understood that the invention is not limited to such disclosed embodiments.

Accordingly, the invention is not to be seen as limited by the foregoing description, but is only limited by the scope of the appended claims.

## Claims

1. A sofa **(10)** of an aircraft, convertible to a bed, the convertible aircraft sofa **(10)** comprising:
at least one seat **(12)** including a seating surface **(14)** and back support **(16);**
a drawer **(18)** that is disposed underneath the seating surface **(14),** is configured to extend outward from underneath the seating surface **(14)** to define an under-seat compartment **(42)** and be positioned spaced from the seating surface **(14),** and includes a panel system **(20)** that is configured to be deployed in stages within the drawer **(18)** for deployment of the convertible aircraft sofa **(10)** to the bed and support at least one cushion **(22)** and has at least one panel **(26)** configured to be brought into spaced relationship with the seating surface **(14)** and then flipped and folded to be positioned adjacent to and in substantial alignment with the seating surface **(14); characterized in that**,
the at least one cushion includes a first cushion (22a) and a second cushion (22c), and the at least one panel (26) includes a first panel (26c); wherein the seating surface (14) is covered with the first cushion (22a) and panel (26c) is disposed directly and immediately beneath the second cushion (22c);
and wherein:
in a first stage of deployment of the panel system (20) to form the bed:
the drawer (18) and second cushion (22c) is extended partially outward horizontally from underneath the seating surface (14) so that only a portion of cushion (22c) is disposed below cushion (22a);
in a second stage of deployment of the panel system (20) to form the bed:
the drawer (18) and the second cushion (22c) is extended completely horizontally outward so that the entirety of the second cushion (22c) is spaced from and disposed below the first cushion (22a);
in a third stage of deployment of the panel system (20) to form the bed: the panel (26c) is deployed so that an entirely of the second cushion (22c) is in alignment with and spaced from the first cushion (22a) and
a bearing pad **(28)** automatically drops into position upon a floor (30) of a cabin of the aircraft located under the convertible aircraft sofa (10); and
in a fourth stage of deployment of the panel system (20) to form the bed:
the panel (26c) is deployed so that an entirety of the first panel (26c), without the second cushion (22c), is flipped and folded over, towards the first cushion (22a), and down, so that the first panel (26c) is adjacent to and in alignment with seating surface (14).

2. The convertible aircraft sofa **(10)** of claim 1, wherein the drawer **(18)** defines front and side shrouds **(40)** that shroud the panels **(26).**

3. The convertible aircraft sofa **(10)** of claim 1 or 2, wherein the bearing pad **(28)** mechanically moves by the deployment of the panel system **(20).**

4. The convertible aircraft sofa **(10)** of any of claims 1 to 3, wherein the convertible aircraft sofa **(10)** comprises further at least one headrest **(60)** that is plugged into the convertible aircraft sofa **(10)** and adjustably stowable by sliding down the headrest **(60)** behind the back support **(16)** and inside a rear portion of the convertible aircraft sofa **(10).**

5. The convertible aircraft sofa **(10)** of any preceding claim, wherein the drawer **(18)** is configured to slide along integral linear bearings.

6. The convertible aircraft sofa **(10)** of any preceding claim, wherein the convertible aircraft sofa **(10)** comprises further a set of legs **(36)** used as seat-to-aircraft attachments.

7. The convertible aircraft sofa **(10)** of claim 6, wherein each of the legs **(36)** includes a seat-mounting mechanism **(54)** and floor-mounting mechanism **(56).**

8. The convertible aircraft sofa **(10)** of claim 6 or 7, further comprises at least one support structure **(34)** that is configured to distribute weight of the seating surface **(14),** back support **(16),** and at least one passenger of the aircraft over the set of legs **(36)** and either of link each of the legs **(36)** and connect the legs **(36)** to the seat **(12).**

## Patentansprüche

1. Sofa (10) eines Flugzeugs, das in ein Bett umwandelbar ist, wobei das umwandelbare Flugzeugsofa (10) Folgendes umfasst:
mindestens einen Sitz (12), einschließend eine Sitzfläche (14) und eine Rückenlehne (16);
ein Schubfach (18), das unter der Sitzfläche (14) angeordnet ist, konfiguriert ist, um sich von unter der Sitzfläche (14) nach außen zu erstrecken, um ein Fach (42) unter dem Sitz zu definieren und beabstandet von der Sitzfläche (14) positioniert zu sein, und ein Plattensystem (20) einschließt, das konfiguriert ist, um zum Ausfahren des umwandelbaren Flugzeugsofas (10) zu dem Bett in Stufen innerhalb des Schubfachs (18) ausgefahren zu werden und mindestens ein Polster (22) zu tragen und mindestens eine Platte (26) aufweist, die konfiguriert ist, um mit der Sitzfläche (14) in eine beabstandete Beziehung gebracht und dann gedreht und geklappt zu werden, um neben und in einer wesentlichen Ausrichtung mit der Sitzfläche (14) positioniert zu sein; **dadurch gekennzeichnet, dass**
das mindestens eine Polster ein erstes Polster (22a) und ein zweites Polster (22c) einschließt, und die mindestens eine Platte (26) eine erste Platte (26c) einschließt; wobei die Sitzfläche (14) von dem ersten Polster (22a) bedeckt ist und die Platte (26c) direkt und unmittelbar unter dem zweiten Polster (22c) angeordnet ist;
und wobei:
in einer ersten Stufe des Ausfahrens des Plattensystems (20) zum Bilden des Bettes:
das Schubfach (18) und das zweite Polster (22c) von unterhalb der Sitzfläche (14) teilweise horizontal nach außen erweitert werden, sodass nur ein Teil des Polsters (22c) unter dem Polster (22a) angeordnet ist;
in einer zweiten Stufe des Ausfahrens des Plattensystems (20) zum Bilden des Bettes:
das Schubfach (18) und das zweite Polster (22c) vollständig horizontal nach außen erweitert werden, sodass das gesamte zweite Polster (22c) von dem ersten Polster (22a) beabstandet und darunter angeordnet ist;
in einer dritten Stufe des Ausfahrens des Plattensystems (20) zum Bilden des Bettes:
die Platte (26c) so ausgefahren wird, dass das gesamte zweite Polster (22c) mit dem ersten Polster (22a) ausgerichtet und davon beabstandet ist und
ein Lagersegment (28) automatisch in eine Position auf einem Boden (30) einer Kabine des Flugzeugs herabsinkt, die sich unter dem umwandelbaren Flugzeugsofa (10) befindet; und
in einer vierten Stufe des Ausfahrens des Plattensystems (20) zum Bilden des Bettes:
die Platte (26c) so ausgefahren wird, dass die gesamte erste Platte (26c), ohne das zweite Polster (22c), zu dem ersten Polster (22a) und nach unten gedreht und umgeklappt wird, sodass sich die erste Platte (26c) neben und in einer Ausrichtung mit der Sitzfläche (14) befindet.

2. Umwandelbares Flugzeugsofa (10) nach Anspruch 1, wobei das Schubfach (18) eine vordere und seitliche Ummantelung (40) definiert, welche die Platten (26) verbergen.

3. Umwandelbares Flugzeugsofa (10) nach Anspruch 1 oder 2, wobei sich das Lagersegment (28) durch das Ausfahren des Plattensystems (20) mechanisch bewegt.

4. Umwandelbares Flugzeugsofa (10) nach einem der Ansprüche 1 bis 3, wobei das umwandelbare Flugzeugsofa (10) ferner mindestens eine Kopfstütze (60) umfasst, die in das umwandelbare Flugzeugsofa (10) eingesteckt ist und durch das Herunterschieben der Kopfstütze (60) hinter die Rückenlehne (16) und in einen hinteren Teil des umwandelbaren Flugzeugsofas (10) verstellbar verstaut werden kann.

5. Umwandelbares Flugzeugsofa (10) nach einem vorhergehenden Anspruch, wobei das Schubfach (18) konfiguriert ist, um entlang integrierter Linearlager zu gleiten.

6. Umwandelbares Flugzeugsofa (10) nach einem vorhergehenden Anspruch, wobei das umwandelbare Flugzeugsofa (10) ferner einen Satz von Beinen (36) umfasst, die als Befestigungen des Sitzes am Flugzeug verwendet werden.

7. Umwandelbares Flugzeugsofa (10) nach Anspruch 6, wobei jedes der Beine (36) einen Sitzbefestigungsmechanismus (54) und Bodenbefestigungsmechanismus (56) einschließt.

8. Umwandelbares Flugzeugsofa (10) nach Anspruch 6 oder 7, das ferner mindestens eine Stützstruktur (34) umfasst, die konfiguriert ist, um Gewicht von der Sitzfläche (14), der Rückenlehne (16) und mindestens einem Passagier des Flugzeugs über den Satz von Beinen (36) zu verteilen und jedes der Beine (36) zu verbinden und die Beine (36) mit dem Sitz (12) zu verbinden.

## Revendications

1. Canapé (10) d'un aéronef, convertible en un lit, le canapé d'aéronef convertible (10) comprenant :
au moins un siège (12) incluant une surface d'assise (14) et un support de dossier (16) ;
un tiroir (18) qui est disposé en dessous de la surface d'assise (14), est configuré pour s'étendre vers l'extérieur depuis le dessous de la surface d'assise (14) afin de définir un compartiment sous le siège (42) et d'être positionné à distance de la surface d'assise (14), et inclut un système de panneaux (20) qui est configuré pour être déployé par étapes à l'intérieur du tiroir (18) pour le déploiement du canapé d'aéronef convertible (10) en lit et supporter au moins un coussin (22) et comporte au moins un panneau (26) configuré pour être mis en relation espacée avec la surface d'assise (14), puis retourné et plié pour être positionné de manière adjacente à la surface d'assise (14) et en alignement substantiel avec celle-ci ; **caractérisé en ce que**,
l'au moins un coussin inclut un premier coussin (22a) et un second coussin (22c), et l'au moins un panneau (26) inclut un premier panneau (26c) ; dans lequel la surface d'assise (14) est recouverte du premier coussin (22a) et le panneau (26c) est disposé directement et immédiatement sous le second coussin (22c) ;
et dans lequel :
dans une première étape de déploiement du système de panneaux (20) pour former le lit :
le tiroir (18) et le second coussin (22c) s'étendent partiellement vers l'extérieur horizontalement à partir du dessous de la surface d'assise (14) de sorte que seule une partie du coussin (22c) est disposée sous le coussin (22a) ;
dans une deuxième étape de déploiement du système de panneaux (20) pour former le lit :
le tiroir (18) et le second coussin (22c) s'étendent complètement horizontalement vers l'extérieur de sorte que la totalité du second coussin (22c) est espacée du premier coussin (22a) et disposée en dessous de celui-ci ;
dans une troisième étape de déploiement du système de panneaux (20) pour former le lit :
le panneau (26c) est déployé de sorte qu'une totalité du second coussin (22c) est en alignement avec le premier coussin (22a) et espacée de celui-ci et
un patin de palier (28) tombe automatiquement en position sur un plancher (30) d'une cabine de l'aéronef située sous le canapé d'aéronef convertible (10) ; et
dans une quatrième étape de déploiement du système de panneaux (20) pour former le lit :
le panneau (26c) est déployé de manière à ce qu'une totalité du premier panneau (26c), sans le second coussin (22c), est retournée et repliée, vers le premier coussin (22a), et vers le bas, de sorte que le premier panneau (26c) est adjacent à la surface d'assise (14) et en alignement avec celle-ci.

2. Canapé d'aéronef convertible (10) selon la revendication 1, dans lequel le tiroir (18) définit des enveloppes avant et latérales (40) qui enveloppent les panneaux (26).

3. Canapé d'aéronef convertible (10) selon la revendication 1 ou 2, dans lequel le patin de palier (28) se déplace mécaniquement par le déploiement du système de panneaux (20).

4. Canapé d'aéronef convertible (10) selon l'une quelconque des revendications 1 à 3, dans lequel le canapé d'aéronef convertible (10) comprend en outre au moins un appui-tête (60) qui est branché dans le canapé d'aéronef convertible (10) et pouvant être rangé de manière réglable par coulissement vers le bas de l'appui-tête (60) derrière le support de dossier (16) et à l'intérieur d'une partie arrière du canapé d'aéronef convertible (10).

5. Canapé d'aéronef convertible (10) selon l'une quelconque des revendications précédentes, dans lequel le tiroir (18) est configuré pour coulisser le long de paliers linéaires intégrés.

6. Canapé d'aéronef convertible (10) selon une quelconque revendication précédente, dans lequel le canapé d'aéronef convertible (10) comprend en outre un ensemble de pieds (36) utilisés comme fixations siège-aéronef.

7. Canapé d'aéronef convertible (10) selon la revendication 6, dans lequel chacun des pieds (36) inclut un mécanisme de montage de siège (54) et un mécanisme de montage au sol (56).

8. Canapé d'aéronef convertible (10) selon la revendication 6 ou 7, comprend en outre au moins une structure de support (34) qui est configurée pour répartir le poids de la surface d'assise (14), du support de dossier (16) et d'au moins un passager de l'aéronef sur l'ensemble de pieds (36) et soit lier chacun des pieds (36) soit relier les pieds (36) au siège (12) .
